# EUROPÄISCHE PATENTSCHRIFT

(11) **EP 0 574 825 B1**
(45) Veröffentlichungstag und Bekanntmachung des Hinweises auf die Patenterteilung: **08.01.1997**
(21) Anmeldenummer: 93109308.2
(22) Anmeldetag: 09.06.1993
(51) Int. Cl.: E06B 1/00, B27F 5/12

(54) **Verfahren und Vorrichtung für das Befestigen der Bandteile an Fensterrahmen und -flügeln**
Method and device for fastening the fittings to window frames and wings
Procédé et dispositif pour fixer des ferrures à des cadres de fenêtre

(30) Priorität: 09.06.1992 DE 4218697; 14.10.1992 DE 4234496
(43) Veröffentlichungstag der Anmeldung: 22.12.1993
(73) Patentinhaber: Schüring GmbH & Co. Fenstertechnologie KG, 53842 Troisdorf (DE)
(72) Erfinder: Förster, Hans-Ulrich, W-5000 Köln 90 (DE)
(74) Vertreter: Freischem, Werner, Dipl.-Ing.

(56) Entgegenhaltungen:
- CH-A- 452 171
- DE-A- 2 421 666
- DE-A- 3 437 092
- FR-A- 2 188 474

## Beschreibung

Die Erfindung bezieht sich auf ein Verfahren für das Befestigen von miteinander korrespondierenden Bandteilen an Fensterrahmen und Fensterflügeln, bei welchem am Fensterrahmen und Fensterflügel Befestigungselemente für die Bandteile an bestimmten Positionen angebracht werden.

Die Bandteile von Fensterrahmen und -flügeln werden im allgemeinen auf Montagevorrichtungen bei der Fensterfertigung angebracht. Bekannte Montagevorrichtungen, wie sie zum Beispiel die DE 34 37 092 A1 beschreibt, arbeiten nach einem Verfahren, bei dem Abtaster die äußeren oder inneren Abmessungen der Rahmen oder Flügel abtasten und die Position der Befestigungselemente diesen Abtastern räumlich fest zugeordnet ist. Diese Zuordnung wird vorzugsweise durch eine starre Koppelung zwischen den Abtastern und den Geräten zum Anbringen der Befestigungselemente erreicht. Bei diesem Verfahren werden also die Positionen der Befestigungselemente relativ zu dem Innen- oder Außenmaß des Rahmens oder Flügels bestimmt, so daß die Abstände zwischen den Bandteilen am Flügel zu den Abständen zwischen den Bandteilen am Rahmen um die zulässige Toleranz des Innen- bzw. des Außenmaßes am Flügel und Rahmen variieren können. Diese Abstandsvariationen haben zur Folge, daß von mehreren Bändern nur eines die Hauptlast aufnimmt.

Aufgabe der Erfindung ist es, ein Verfahren zu schaffen, bei dem die Bandteile eines Fensters derart am Rahmen und am Flügel befestigt werden, daß alle Bänder des Fensters im wesentlichen die gleiche Teillast tragen. Eine weitere Aufgabe besteht darin, die Bandteile so am Rahmen und am Flügel zu befestigen, daß der Flügel mittig zu der ihn aufnehmenden Öffnung des Rahmens angelenkt ist.

Die Aufgabe wird dadurch gelöst, daß die Abstände aller Positionen der Befestigungselemente am Rahmen und am Flügel relativ zur Mitte des Rahmens und Flügels festgelegt werden, wobei die Positionen der Befestigungselemente am Rahmen relativ zur Mitte von dessen innerem Höhenmaß und am Flügel relativ zur Mitte von dessen äußerem Höhenmaß festgelegt werden.

Durch das Loslösen der Positionsbestimmung für die Befestigungselemente von dem realen Maß des Fensterrahmens und Fensterflügels wirken sich die Fertigungstoleranzen von Rahmen- und Flügelmaß nicht auf die Abstände der Bandteile zueinander aus. Die Positionen der Bohrungen für die Befestigungselemente können zum Beispiel mit einer starren Abstandslehre, die zum Rahmen oder Flügel zentriert angelegt wird, bestimmt werden.

Die meisten Fensterrahmen und -flügel sind symmetrisch und weisen oben, unten und an den Seiten die gleichen in engen Toleranzen gefertigten Profile auf. Bei derartigen Bauteilen ist es unwesentlich, ob die Bauteilmitte anhand des Innenmaßes oder des Außenmaßes bestimmt wird.

Bei Fensterrahmen und -flügeln, die nicht symmetrisch sind oder deren Rahmenprofile handgefertigt sind und daher größere Fertigungstoleranzen aufweisen, ist es erforderlich, am Rahmen und am Flügel jeweils die einander zugeordneten Höhenmaße zum Bestimmen der Bauteilmitte zu verwenden. Dazu ist am Flügel das äußere Höhenmaß, das heißt die Flügelfalzhöhe abzugreifen und am Rahmen das innere Höhenmaß, das heißt der Abstand der Rahmenschenkel, die bei geschlossenem Fenster dem oberen und unteren Flügelfalz gegenüberliegen. Durch eine derartige Zentrierung beider Bauteile wird gewährleistet, daß das obere und das untere Kammermaß identisch sind und Maßabweichungen im Rahmen der Fertigungstoleranzen am besten ausgeglichen sind.

Für den Einsatz des Verfahrens bei der automatisierten Fensterfertigung ist der Rahmen oder der Flügel auf eine Montagevorrichtung zu legen und darauf zu zentrieren, so daß die Mitte des Rahmens oder Flügels mit der Mitte der Montagevorrichtung übereinstimmt. Anschließend können die Positionen der Befestigungselemente der Bandteile mit einer an der Montagevorrichtung fest installierten Abstandslehre bestimmt werden, welche die Positionsmarkierungen relativ zur Mitte der Montagevorrichtung aufweist.

Eine Vorrichtung für die Anwendung des erfindungsgemäßen Verfahrens geht aus den Ansprüchen 3 bis 14 hervor. Die Vorrichtung zum Zentrieren und Feststellen des Rahmens oder Flügels besteht aus zwei gegenläufigen Spannblöcken, die beispielsweise über ein Verbindungsband und Umlenkrollen miteinander gekoppelt sind. Die Spannblöcke können pneumatisch oder mechanisch angetrieben werden, und die Kopplung der Spannblöcke kann auch über ein Getriebe erfolgen, zum Beispiel an den Spannblöcken angeordnete Zahnstangen, die parallel zueinander verlaufen und über ein Zahnrad miteinander gekoppelt sind.

Die an der Montagevorrichtung fest installierte Abstandslehre kann zum Beispiel von an der Vorderseite des Montagetisches angeordneten Zapfenaufnahmen gebildet werden, in die ein Arretierungszapfen eingreift, der an dem Schlitten angeordnet ist, welcher die Geräte zum Anbringen der Befestigungselemente trägt. Für jede Bearbeitungsposition ist dabei eine Zapfenaufnahme vorzusehen. Zur Bearbeitung von Fensterbauteilen mit unterschiedlichen Höhenmaßen können die Zapfenaufnahmen von einer Metalleiste gebildet werden, die an ihrer Vorderseite Rastnuten im Abstand von z.B. 25 mm zueinander aufweist. Somit lassen sich die Bandteile in Abhängigkeit von der Flügelfalzhöhe an den optimalen Positionen am Rahmenprofil oder Flügelprofil befestigen.

Eine noch höhere Flexibilität in der Bestimmung der Positionen der Befestigungselemente wird erreicht, wenn als Abstandslehre eine kontinuierliche, automatisch lesbare Meßleiste, wie zum Beispiel eine optische oder elektronische Inkrementenleiste, verwendet wird und der Schlitten mit einer Bremsvorrichtung in seiner Position arretiert wird. Eine derartige Anordnung ermöglicht die automatische, zum Beispiel numerisch gesteuerte, Ermittlung der Positionen der Befestigungselemente in Abhängigkeit von dem Abstand der Spannblöcke und damit dem Höhenmaß des Rahmens oder des Flügels.

Bei einer Ausführungsform des Montagetisches, insbesondere zum Anbringen von Bändern, bei denen das Flügelbandteil mit einem mittigen Einschraubzapfen in das Flügelprofil eingeschraubt wird und die Schraublöcher zum Befestigen des Rahmenbandteils zur Bandteilmitte symmetrisch sind, sind auf dem Schlitten übereinander ein Bohrgerät und ein Einschraubgerät, deren Achsen im wesentlichen in der Ebene des Montagetisches liegen, sowie eine Bohrschablone angeordnet, die senkrecht verlaufende Bohrbuchsen aufweist. Dabei liegen die Achsen des Bohr- und des Schraubgerätes sowie die Mittellinie der Bohrschablone in der gleichen senkrecht zur Tischebene verlaufenden Ebene. Die Anordnung der drei Bearbeitungsgeräte auf einem Schlitten ist kostengünstig, und das Bearbeiten der Flügelprofile, bei denen zuerst eine Bohrung angebracht und dann der Einschraubzapfen des Flügelbandteils eingeschraubt wird, ist wenig zeitaufwendig, da nicht ein zweiter Schlitten mit dem Einschraubgerät in Position gebracht werden muß, sondern lediglich das die Geräte tragende Gestell von der Arbeitsposition des Bohrers in die Arbeitsposition des Schraubers in der Höhe verschoben werden muß. Für das Anbringen der Rahmenbandbohrungen muß der Schlitten in die gleichen Arretierungspositionen gebracht werden wie bei dem Flügelbandteil, da aufgrund des mittigen Einschraubzapfens kein Versatz zwischen der Einschraubzapfenachse und der Mittellinie des Bohrbildes für die Rahmenbandbefestigung nötig ist. Anschließend kann die ausziehbare Bohrschablone auf das Rahmenprofil aufgelegt werden, und die Bohrungen können durch die Bohrbuchsen hindurch in dem Rahmenprofil angebracht werden. Da das Bohrbild des Rahmenbandteils symmetrisch zur Bandteilmitte ist, spielt es keine Rolle, ob das Band rechts oder links an dem Fenster anzuordnen ist. Diese Anordnung der drei Befestigungsgeräte übereinander ist auch unabhängig von den beanspruchten Befestigungsverfahren vorteilhaft einzusetzen.

Der Einsatz der Bohrschablone ist eine kostengünstige Lösung und zum Beispiel bei dem Übergang von manueller Fertigung zu teilautomatisierter Fertigung vorteilhaft. Für eine vollautomatische Fertigung kann anstatt der Schablone ein Bohrgerät eingesetzt werden, das mehrere im Abstand der Schraublöcher des Rahmenbandteils angeordnete Bohrer mit rechtwinklig zur Tischebene verlaufender Bohrachse und Vorschubrichtung aufweist.

Eine weitere Alternative zur Vorrichtung mit übereinanderliegenden Bohrer- und Schrauberachsen ist eine Vorrichtung, bei der diese Achsen nebeneinander in einer horizontalen Ebene liegen. Eine derartige Vorrichtung wird zum Beispiel eingesetzt, wenn als Führungsschiene für den Schlitten ein Aluminium-Tragprofil verwendet wird, so daß dieses Tragprofil mit Schlitten und Werkzeugen eine separate Baueinheit bildet.

Bei der Anordnung von Bohrer und Schrauber nebeneinander, liegen die Arbeitspositionen hierfür in Richtung der Führungsschiene horizontal nebeneinander. Damit nicht irrtümlicherweise der Bohrer betätigt wird, wenn das Tragegestell in der Arbeitsposition für den Schrauber ist, ist eine Steuervorrichtung vorzusehen, die in der jeweiligen Arbeitsposition nur den Antrieb des entsprechenden Werkzeuges freigibt. Dies kann durch einen Endanschlagtaster geschehen, der ein Signal abgibt, wenn das Tragegestell gegen einen Anschlag für die Arbeitsposition des Bohrers anliegt. In diesem Fall wird zum Beispiel die Luftzufuhr für einen pneumatischen Bohrer mit einem Dreiwegeventil aktiviert und die des Schraubers gesperrt. Ist das Signal nicht vorhanden, so ist die Luftzufuhr für den Schrauben durchgeschaltet und die für den Bohrer gesperrt.

Weitere Merkmale der Erfindung ergeben sich aus den Ansprüchen und der folgenden Beschreibung eines Ausführungsbeispiels der Erfindung anhand der Zeichnungen.

Die Zeichnungen zeigen in
- Fig. 1: eine schaubildliche Darstellung des Montagetisches mit Zentriervorrichtung sowie einem längs des Montagetisches verschiebbaren Schlitten, auf dem eine Schraub- und Bohreinheit für die Flügelbandteilbefestigung angeordnet ist,
- Fig. 2: eine schaubildliche Darstellung des verschiebbaren Schlittens, auf dem zusätzlich eine Bohrschablone für die Rahmenbandteilbefestigung angeordnet ist,
- Fig. 3: die Draufsicht auf einen Montagetisch mit eingespanntem Rahmenprofil und
- Fig. 4: die Seitenansicht einer schematischen Darstellung der an dem Montagetisch angeordneten Bearbeitungsgeräte.

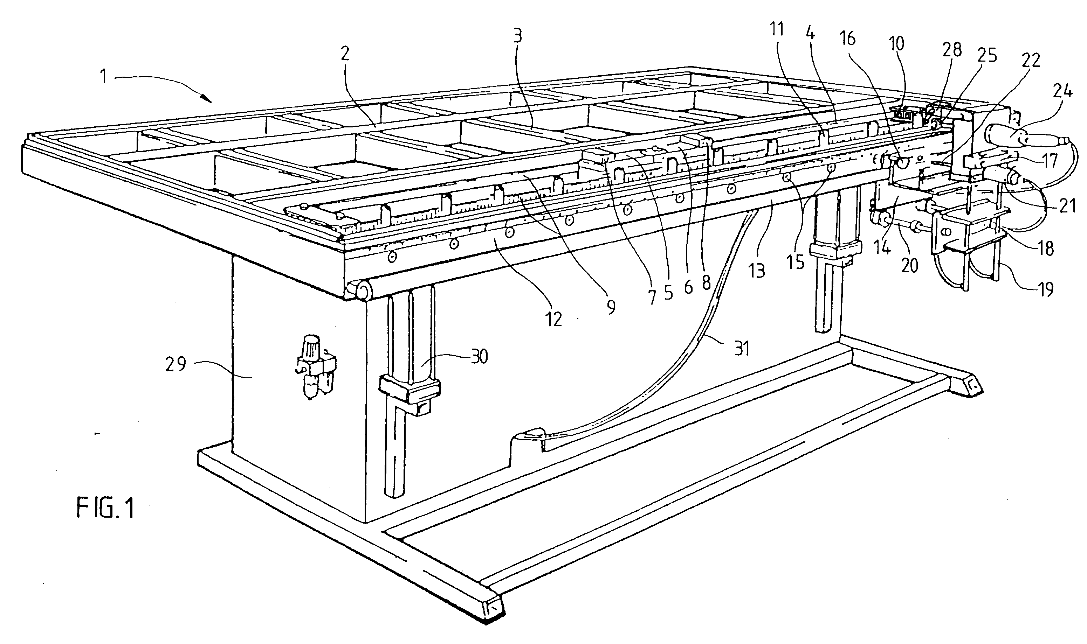

Bei dem in Fig. 1 bis Fig. 3 dargestellten Montagetisch 1 ist die Tischfläche offen und besteht aus Längsstreben 2 und Querstreben 3. Der vordere Abschnitt der Tischfläche weist keine Querstreben auf. Hier ist zum zentrierten Einspannen der Rahmen- und Flügelprofile eine Gleitschiene 4 angeordnet, auf der zwei Zentrierschlitten 5,6 geführt sind, an deren Oberseite die Spannblöcke 7,8 befestigt sind. Der Zentrierschlitten 5 ist über einen pneumatischen Antrieb in der Gleitschiene 4 automatisch vor- und zurückschiebbar. Der Zentrierschlitten 6 ist über ein umlaufendes Verbindungsband 9, zum Beispiel einem faserverstärkten Zahnriemen oder einem dünnen Metallband, mit dem Zentrierschlitten 5 verbunden und befindet sich dadurch zwangsläufig im gleichen Abstand zur Mitte der Gleitschiene 4 und damit zur Mitte des Montagetisches 1. Das Verbindungsband 9 wird an den Enden der Gleitschiene 4 über Umlenkrollen 10 umgelenkt.

Um den zu bearbeitenden Fensterflügel oder -rahmen in der Richtung quer zur Gleitschiene 4 zu arretieren, sind im vorderen Bereich des Montagetisches 1 schwenkbare Anschlagrollen 11 angeordnet. Die Anschlagrollen 11 schwenken um eine rechtwinklig zur Gleitschiene 4 und parallel zur Tischebene verlaufende Achse, so daß der Fensterrahmen oder -flügel widerstandslos in Richtung der Gleitschiene 4 auf dem Montagetisch verschoben werden kann.

An der Vorderseite 12 des Montagetisches 1 ist eine stangenförmige Führungsschiene 13 angeordnet, auf der der Schlitten 14 geführt ist, welcher die Bearbeitungsgeräte trägt. Um den Schlitten 14 an seinen Arbeitspositionen zu arretieren, weist die Vorderseite 12 des Montagetisches 1 Zapfenaufnahmen 15 auf, in die ein von Hand zu betätigender federnder Arretierungszapfen 16, der an dem Schlitten 14 befestigt ist, eingreift. Wie oben angedeutet, können die Zapfenaufnahmen 15 auch durch eine parallel zur Führungsschiene 13 verlaufende Leiste (nicht dargestellt) mit Arretierungsnuten für den Eingriff des Arretierungszapfen 16 ersetzt werden.

Auf dem Schlitten 14 ist das Tragegestell 17 angeordnet, an dem die Bearbeitungsgeräte befestigt sind. Mit den rechtwinklig zur Tischebene verlaufenden Führungsstangen 18 ist das Tragegestell 17 im wesentlichen in vertikaler Richtung verschiebbar an dem Schlitten befestigt. Die vertikale Verschiebung erfolgt durch die beiden Pneumatik-Zylinder 19. Die vertikale Verschiebung erfolgt nur in zwei diskreten Positionen, nämlich den Arbeitspositionen der Bearbeitungsgeräte. Da Flügel und Rahmen mit unterschiedlicher Profilbreite zu bearbeiten sind, ist eine hier nicht dargestellte Vorrichtung für die Verstellung des horizontalen Abstandes der vertikalen Arretierungspositionen relativ zur Tischebene vorzusehen.

Die Verschiebung in der Bearbeitungsrichtung erfolgt über die beiden im wesentlichen horizontal verlaufenden Führungsstangen 20. Die Führungs- und Verschiebevorrichtung für den Schlitten 14 und das Tragegestell 17 sind in allen Darstellungen schematisch angedeutet und nicht in allen Einzelheiten dargestellt.

Zum Anbringen der im wesentlichen parallel zur Tischebene 52 verlaufenden Bohrungen im Flügelprofil ist an dem Tragegestell 17 das Bohrgerät 21 mit dem Bohrer 22 angebracht. Oberhalb des Bohrgerätes 21 ist das Schraubgerät 24 zum Einschrauben der Einschraubzapfen des Flügelbandteils angeordnet. Dazu kann das Flügelbandteil in die Bandteilaufnahme 25 des Schraubgerätes 24 eingeschoben werden. Die Drehachse des Bohrers 22 und die Einschraubachse der Bandteilaufnahme 25 verlaufen zueinander parallel und befinden sich in der gleichen vertikalen, rechtwinklig zur Vorderseite 12 des Tisches verlaufenden Ebene. Nach dem Bohren mit dem Bohrer 22 muß zum Einschrauben des Flügelbandteils daher das Tragegestell 17 nur in vertikaler Richtung nach unten verschoben werden, um das Schraubgerät 24 in seine Arbeitsposition zu bringen.

Um eine Beschädigung des zu bearbeitenden Flügels oder Rahmens oder eine Beschädigung der Bearbeitungsgeräte zu vermeiden, sind zwei Sicherungsvorrichtungen vorgesehen. Neben der Bandteilaufnahme 25 des Schraubgerätes 24 ist ein Vorschubsensor 27 angeordnet. Dieser tritt beim Einschrauben des Flügelbandteils mit dem Flügelprofil in Kontakt, wenn das Ende des Einschraubweges erreicht ist, und gibt dabei ein Signal an eine nicht dargestellte Steuervorrichtung. Die Steuervorrichtung unterbricht die Luftzufuhr zu dem pneumatischen Schraubgerät 24 und beendet so die Schraubbewegung.

Ein Vorschubsensor 27 wirkt mit einer der horizontalen Führungsstangen 20 zusammen und gibt ein Signal an die Steuervorrichtung, wenn das Tragegestell 17 von seiner hinteren Endposition aus in Vorschubrichtung verschoben ist. Aufgrund dieses Signals blockiert die Steuervorrichtung das vertikale Anheben oder Absenken des Tragegestells 17, so daß der Bohrer 22, die Bandteilaufnahme 25 oder das Flügelprofil nicht dadurch beschädigt werden können, daß das Tragegestell 17 vertikal verschoben wird, während eines der Werkzeuge 22, 25 mit dem Flügelprofil in Eingriff ist.

An dem den Tisch tragenden Fußgestell 29 sind zwei Verstellzylinder 30 angeordnet, mit denen die Tischebene um bis zu 10° verschwenkt werden kann. Weiterhin zeigt die Fig. 1 die Luftleitungen 31 für die Luftzufuhr zu dem pneumatischen Schraubgerät 24, dem pneumatischen Bohrgerät 17 sowie für den Pneumatikantrieb in der Gleitschiene 4.

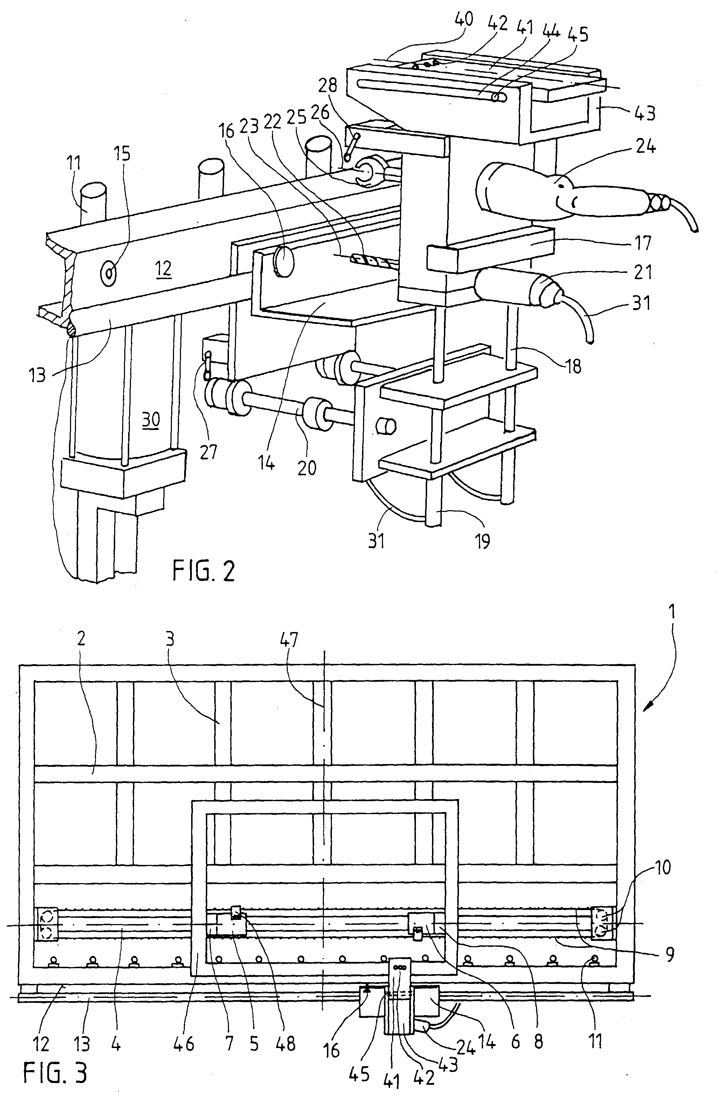

Die Fig. 2 zeigt eine vergrößerte Darstellung des an dem Montagetisch 1 befestigten Schlittens 14 mit dem die Arbeitsgeräte tragenden Gestell 17. Hier ist zusätzlich zu der in Fig. 1 dargestellten Anordnung oberhalb des Schraubgerätes 24 eine Bohrschablone 41 mit Bohrbuchsen 42 angeordnet. Die Mittellinie 40 der Bohrschablone 41 verläuft parallel zu und in der gleichen vertikalen Ebene mit der Bohrachse 23 des Bohrers 22 und der Einschraubachse 26 der Bandteilaufnahme 25. Diese Anordnung ermöglicht das Anbringen der Bohrungen für die Rahmenbandteile von Bändern, bei denen der Einschraubzapfen des Flügelbandteils in der Bandmitte angeordnet ist, da hier kein Versatz zwischen der mit dem Bohrer 22 angebrachten Bandzapfenbohrung und der Mitte der Bohrbildes der Bohrschablone nötig ist. Ist der Einschraubzapfen des Flügelbandteiles nicht mittig, so muß die Bohrschablone um den Versatz des Einschraubzapfens nach rechts und links verschiebbar sein, je nach dem, ob die Bänder rechts oder links an dem Fenster anzuordnen sind.

Die Bohrschablone ist in Richtung ihrer Mittellinie verschiebbar und in den anderen Richtungen möglichst spielfrei in einem U-förmigen Schablonenträger 43 geführt. Dazu greift der Führungsbolzen 45 der Bohrschablone 41 in je einen Führungsschlitz 44 in den Seitenwänden des Schablonenträgers 43 ein. Von dem Montagetisch 1 ist in Fig. 2 nur ein Abschnitt des vorderen Rahmenträgers mit den Anschlagrollen 11 dargestellt.

Die Fig. 3 zeigt den Montagetisch 1 mit einem zentriert festgespannten Rahmenprofil 46, auf das die Bohrschablone 41 aufgelegt ist. Die Bohrungen zur Befestigung des Rahmenbandteils können nun durch die Bohrbuchsen 42 der Bohrschablone 41 hindurch in dem Rahmenprofil 46 angebracht werden. In der Fig. 3 ist noch einmal deutlich der Zentrier- und Feststellmechanismus für den Fensterrahmen oder -flügel zu sehen. In der Gleitschiene 4 befindet sich ein pneumatischer Antrieb für den Zentrierschlitten 5, der über das Verbindungsband 9 mit dem Zentrierschlitten 6 gekoppelt ist. Das Verbindungsband 9 ist mit den an den Zentrierschlitten 5,6 festgeschraubten Klemmteilen 48 festgeklemmt. Die Umlenkung des Verbindungsbandes 9 an den Tischenden erfolgt mit den Umlenkrollen 10. Die auf den Zentrierschlitten 5,6 angeordneten Spannblöcke 7,8 wirken mit den Innenflächen des Rahmenprofils 46 zusammen und spannen so den Rahmen mittig auf den Montagetisch 1 fest. Zum Festspannen eines Fensterflügels ist es vorteilhaft, die Spannblöcke 7,8 von außen gegen das Rahmenprofil zu spannen. Den Anschlag für das Rahmenprofil 46 ist Richtung der Tischmittellinie 47 bilden Anschlagrollen 11. Das Rahmenprofil 46 kann von einem hier nicht dargestellten, auf dem Schlitten 14 angeordneten pneumatischen Anpreßbolzen gegen die Anschlagrollen 11 gedrückt werden.

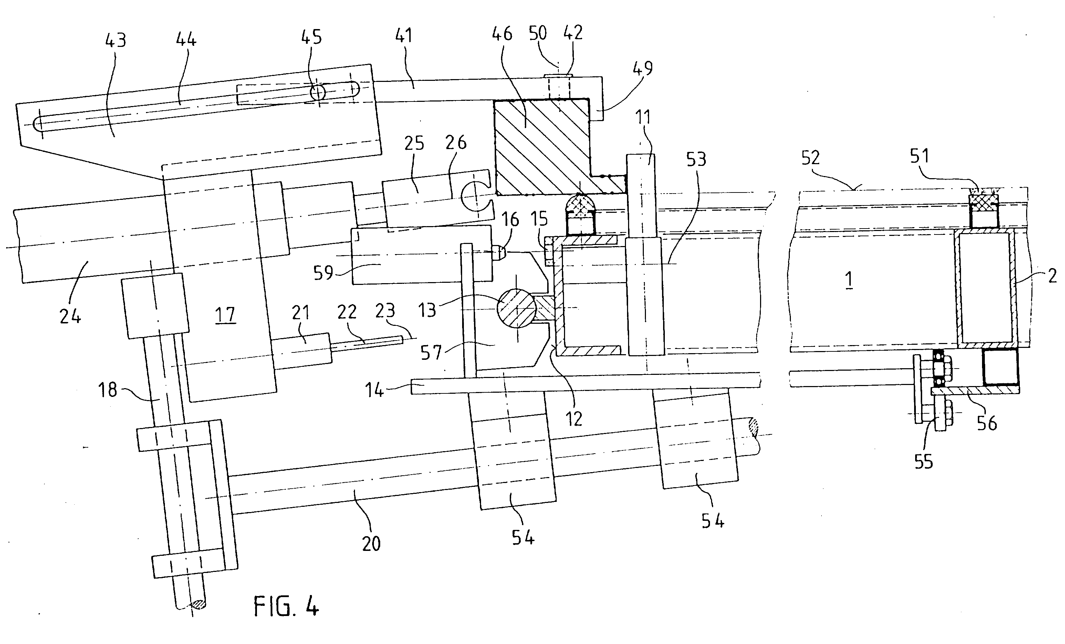

Die Fig. 4 zeigt eine schematische Seitenansicht der Bearbeitungsgeräte 21, 24, 41 auf dem Tragegestell 17 mit einem Schnitt durch den Montagetisch 1 und durch das Rahmenprofil 46. Zur Bearbeitung des Rahmenprofils 46 ist die Bohrschablone 41 auf dessen Stirnseite aufgelegt. Man erkennt den Anschlag 49 am Ende der Bohrschablone 41, der die Positionen der Bohrbuchsen 42 auf der Oberseite des Rahmenprofils 46 fixiert. Die Bohrungsachse 50 der Bohrbuchsen 42 verläuft rechtwinklig zur Tischebene 52.

Um ein Verschieben der Fensterrahmen und -flügel auf dem Montagetisch 1 zu vereinfachen, sind auf den Längsstreben 2 und Querstreben 3 des Montagetisches 1 Gleitbürsten 51 angeordnet, von denen eine in Fig. 4 schematisch dargestellt ist. Damit trotz der aus der Tischebene 52 herausragenden Anschlagrollen 11 das Verschieben des Rahmenprofils in Tischlängsrichtung möglich ist, sind die Anschlagrollen 11 um die Achse 53 schwenkbar an dem Montagetisch angelenkt. Die im wesentlichen horizontalen Führungsstangen 20 des Tragegestells 17 sind für die Führung in Vorschubrichtung des Bohrgerätes 21 und des Schraubgerätes 24 in zwei an dem Schlitten 14 befestigten Axiallagern 54 geführt. Man erkennt, daß die Vorschubrichtung nicht ganz parallel zur Tischebene 52 verläuft, sondern 5° dazu geneigt ist, da durch ein leichtes Neigen des Einschraubzapfens des Flügelbandteils größere Kräfte von dem Einschraubzapfen auf das Flügelprofil übertragen werden können.

Der Schlitten 14 ist durch die Axiallagerung 57 auf der Führungsschiene 13 geführt. Eine zweite Führung mittels der Kugellager 55 auf einer Laufleiste 56, die parallel zur Vorderseite 12 des Tisches verläuft, wird ein Kippen des Schlittens 14 um die Achse der runden Führungsschiene 13 verhindert.

Bei der Ausführungsform in Fig. 4 ist der Arretierungszapfen 16 nicht mehr manuell zu betätigen, sondern wird mit einem Pneumatikzylinder 59 vor- und zurückbewegt.

### Bezugszeichenliste:

- 1: Montagetisch
- 2: Längstrebe
- 3: Querstrebe
- 4: Gleitschiene
- 5: Zentrierschlitten
- 6: Zentrierschlitten
- 7: Spannblock
- 8: Spannblock
- 9: Verbindungsband
- 10: Umlenkrolle
- 11: Anschlagrolle
- 12: Vorderseite
- 13: Führungsschiene
- 14: Schlitten
- 15: Zapfenaufnahme
- 16: Arretierungszapfen
- 17: Tragegestell
- 18: vertikale Führungsstange
- 19: Pneumatikzylinder
- 20: horizontale Führungsstange
- 21: Bohrgerät
- 22: Bohrer
- 23: Bohrachse
- 24: Schraubgerät
- 25: Bandteilaufnahme
- 26: Einschraubachse
- 27: Vorschubsensor
- 28: Kontaktsensor
- 29: Fußgestell
- 30: Verstellzylinder
- 31: Luftleitung
- 40: Mittellinie
- 41: Bohrschablone
- 42: Bohrbuchse
- 43: Schablonenträger
- 44: Führungsschlitz
- 45: Führungsbolzen
- 46: Rahmenprofil
- 47: Tischmittellinie
- 48: Klemmteil
- 49: Anschlag
- 50: Bohrungsachse
- 51: Gleitbürste
- 52: Tischebene
- 53: Schwenkachse
- 54: Axiallager
- 55: Kugellager
- 56: Laufleiste
- 57: Axiallagerung
- 58: pneumatischer Arretierungszapfen
- 59: Pneumatikzylinder

## Patentansprüche

1. Verfahren für das Befestigen von miteinander korrespondierenden Bandteilen an Fensterrahmen und Fensterflügeln, bei welchem am Fensterrahmen und Fensterflügel Befestigungselemente für die Bandteile an bestimmten Positionen angebracht werden,
dadurch gekennzeichnet, daß die Abstände aller Positionen der Befestigungselemente am Rahmen und am Flügel relativ zur Mitte des Rahmens und Flügels festgelegt werden, wobei die Positionen der Befestigungselemente am Rahmen relativ zur Mitte von dessen innerem Höhenmaß und am Flügel relativ zur Mitte von dessen äußerem Höhenmaß festgelegt werden.

2. Verfahren nach Anspruch 1, dadurch gekennzeichnet, daß der Rahmen oder der Flügel auf eine Montagevorrichtung (1) gelegt und darauf zentriert wird, so daß die Mitte des Rahmens oder Flügels mit der Mitte (47) der Montagevorrichtung (1) übereinstimmt und daß die Positionen der Befestigungselemente mit einer an der Montagevorrichtung (1) fest installierten Abstandslehre bestimmt werden.

3. Vorrichtung für das Befestigen der Bandteile an Fensterrahmen und Fensterflügeln nach dem Verfahren aus Anspruch 2, bestehend aus einem Montagetisch (1) mit einer Vorrichtung (4-10) zum Zentrieren und Feststellen des Rahmens oder des Flügels, einer längs des Montagetisches (1) verlaufenden Führungsschiene (13) und einem darauf verschiebbar angeordneten Schlitten (14), auf dem mindestens ein Bohrgerät (21) mit einer rechtwinklig zur Führungsschiene (13) verlaufenden Bohrachse (23) angeordnet ist, wobei das Bohrgerät (21) in Richtung der Bohrachse (23) vorschiebbar ist, dadurch gekennzeichnet, daß der Montagetisch (1) in festgelegten Abständen zu seiner Mitte (47) angeordnete Rastvorrichtungen (15) aufweist und daß der Schlitten (14) ein mit diesen Rastvorrichtungen (15) zusammenwirkendes Arretierungselement (16) aufweist.

4. Vorrichtung insbesondere nach Anspruch 3, dadurch gekennzeichnet, daß die Bohrachse (23) im wesentlichen parallel zur Tischebene (52) verläuft und auf dem Schlitten (14) zusätzlich ein Schraubgerät (24) angeordnet ist, dessen Einschraubachse (26) mit der Bohrachse (23) in einer Ebene liegt und zu der Bohrachse (23) parallel ist, wobei Schraubgerät (24) und Bohrgerät (21) an einem Tragegestell (17) auf dem Schlitten (14) befestigt sind, welches rechtwinklig zur Bohrachse (23) und Einschraubachse (26), in der die beide Achsen verbindende Ebene in zwei Arbeitspositionon verschiebbar und in Richtung der Bohr- und Einschraubachsen kontinuierlich verschiebbar ist.

5. Vorrichtung nach Anspruch 4, dadurch gekennzeichnet, daß sie eine Steuervorrichtung mit einem Vorschubsensor (27) umfaßt, der ein Signal an die Steuervorrichtung gibt, wenn das Tragegestell (17) in Richtung der Einschraubachse (26) bzw. Bohrachse (23) zum Montagetisch (1) hin verschoben ist, wobei die Steuervorrichtung aufgrund des Signals die Verschiebung des Tragegestells (17) in die jeweils andere Arbeitsposition blockiert.

6. Vorrichtung nach Anspruch 4 oder 5, dadurch gekennzeichnet, daß sie ein Antriebsmittel, zum Beispiel einen doppeltwirkenden Pneumatikzylinder, umfaßt, mit dem das Tragegestell (17) gegen Endanschläge in die beiden Arbeitspositionen bewegbar ist.

7. Vorrichtung nach einem der Ansprüche 4 bis 6, dadurch gekennzeichnet, daß sie eine Steuervorrichtung mit einem Positionssensor umfaßt, der ein Signal an die Steuervorrichtung gibt, wenn das Tragegestell (17) in einer der beiden Arbeitspositionen ist, wobei die Steuervorrichtung bei Vorhandensein dieses Signales nur den Antrieb des dieser Arbeitsposition zugeordneten Werkzeuges (21 bzw. 24) und bei Nichtvorhandensein nur den Antrieb des anderen Werkzeuges (24 bzw. 21) freigibt.

8. Vorrichtung nach einem der Ansprüche 4 bis 7, dadurch gekennzeichnet, daß an dem Tragegestell (17) eine Einrichtung zum Verstellen des Abstandes zwischen den beiden Arbeitspositionen und der Tischebene (52) angeordnet ist.

9. Vorrichtung nach einem der Ansprüche 4 bis 8, dadurch gekennzeichnet, daß sie eine Steuervorrichtung mit einem Kontaktsensor (28) umfaßt, der durch Berührung mit dem Flügelprofil ein Signal an die Steuervorrichtung gibt, wenn das Schraubgerät (24) beim Einschrauben eines Bandteils in das Flügelprofil das Ende des Einschraubweges erreicht hat und die Steuervorrichtung aufgrund dieses Signals die Schraubbewegung des Schraubgerätes (24) beendet.

10. Vorrichtung nach einem der Ansprüche 3 bis 9, dadurch gekennzeichnet, daß auf dem Schlitten (14) eine Einrichtung zum Anbringen der Rahmenbohrungen mit rechtwinklig zur Tischebene (52) verlaufenden Bohrungsachsen (50) angeordnet ist.

11. Vorrichtung nach Anspruch 10, insbesondere zum Anbringen der Rahmenbohrungen für Bänder mit zur Bandteilmitte symmetrischen Schraublöchern am Rahmenbandteil, dadurch gekennzeichnet, daß die Einrichtung zum Anbringen der Rahmenbohrungen eine auf die Stirnfläche des Rahmenprofils (46) auflegbare und mit einem Handbohrer zusammenwirkende Bohrschablone (41) mit rechtwinklig zur Tischebene (52) verlaufenden Bohrbuchsen (42) ist, die im wesentlichen parallel zur Tischebene (52) und rechtwinklig zur Führungsschiene (13) vor- und zurückschiebbar an dem Tragegestell (17) angelenkt ist, wobei die Bohrschablone (41) einen sich gegen das Rahmenprofil (46) anlegenden Anschlag (49) aufweist.

12. Vorrichtung nach Anspruch 11, zum Anbringen der Rahmenbohrungen für Bänder mit mittigem Einschraubzapfen am Flügelbandteil, dadurch gekennzeichnet, daß die Mittellinie (40) des Bohrbildes der Bohrschablone (41) in der vertikalen Ebene der Bohrachse (23) und/oder der Einschraubachse (26) liegt.

13. Vorrichtung nach Anspruch 11, zum Anbringen der Rahmenbohrungen für Bänder mit einem Versatz zwischen dem Einschraubzapfen am Flügelbandteil und der Bandteilmitte, dadurch gekennzeichnet, daß die Bohrschablone (41) an dem Tragegestell (17) in zwei Positionen feststellbar befestigt ist, in welchen die Mittellinie (40) der Bohrschablone (41) parallel zur Führungsschiene (13) in je einer Richtung um das Maß des Versatzes zur Bohrachse (23) und/oder Einschraubachse (26) verschoben ist.

14. Vorrichtung nach Anspruch 10, dadurch gekennzeichnet, daß die Einrichtung zum Anbringen der Rahmenbohrungen ein auf dem Schlitten (14) rechtwinklig zur Tischebene (52) verschiebbar angeordnetes Bohrgerät ist.

## Claims

1. A method for attaching hinge parts corresponding to each other to window frames and leaves of windows, in which fastening elements for the hinge parts are mounted in certain positions on the window frame and the leaf of the window,
characterized in that the distance of each position of the fastening elements on the frame and on the leaf is determined with reference to the centre of the frame and the leaf, the positions of the fastening elements on the frame being determined with reference to the centre of its inner height and of those on the leaf with reference to the centre of its outer height.

2. Method according to claim 1, characterized in that the frame or leaf is placed on a mounting device (1) and centred thereon such that the centre of the frame or leaf coincides with the centre (47) of the mounting device (1) and that the positions of the fastening elements are determined by means of a distance calibre tightly fixed to the mounting device (1).

3. Device for attaching the hinge parts to window frames and leaves of windows according to the method of claim 2, comprising a mounting table (1) having a device (4-10) for centring and fixing the frame or leaf, a guide rail (13) extending alongside of the mounting table (1) and a carriage (14) arranged slideably on said rail and carrying at least one boring implement (21) with its boring axis (23) extending perpendicularly to the guide rail (13), the boring implement (21) being movable in the direction of the boring axis (23),
characterized in that the mounting table (1) is provided with snap-in locking devices (15) arranged at set distances from its centre (47) and that the carriage (14) is provided with a locking element (16) co-operating with these snap-in locking devices (15).

4. Device, in particular according to claim 3, characterized in that the boring axis (23) extends essentially parallel to the plane (52) of the table and that the carriage (14) additionally carries a screwing implement (24) with a screwing axis (26) being arranged in one plane together with the boring axis (23) and parallel to the boring axis (23), the screwing implement (24) and the boring implement (21) being fixed to a support (17) on the carriage (14), which support is slideable perpendicularly to the boring axis (23) and the screwing axis (26) along the plane linking the two axes into two working positions and continuously in the direction of the boring and the screwing axes.

5. Device according to claim 4, characterized in that it comprises a control unit with a feed sensor (27) supplying a signal to the control unit when the support (17) has been displaced in the direction of the screwing axis (26) or the boring axis (23) towards the mounting table (1), the control unit blocking displacement of the support (17) into the other working position due to said signal.

6. Device according to claims 4 or 5, characterized in that it comprises a driving means, e.g. a double action pneumatic cylinder, for moving the support (17) against limit stops into the two working positions.

7. Device according to one of claims 4 to 6, characterized in that it comprises a control unit with a position sensor which supplies a signal to the control unit when the support (17) is in one of the two working positions, the control unit releasing only the driving means of the implement corresponding to this working position (21 or 24) in the presence of this signal and releasing only the driving means of the other implement (24 or 21) in its absence.

8. Device according to one of claims 4 to 7, characterized in that the support (17) is provided with a device for adjusting the distance between the two working positions and the plane (52) of the table.

9. Device according to one of claims 4 to 8, characterized in that it comprises a control unit with a contact sensor (28) which by touching the leaf profile supplies a signal to the control unit when the screwing implement (24) has reached the end of the screwing feed while screwing a hinge part into the leaf profile, the control unit stopping the screwing movement of the screwing implement (24) due to this signal.

10. Device according to one of claims 3 to 9, characterized in that the carriage (14) carries a device for applying the frame bores with boring axes (50) extending perpendicularly to the plane (52) of the table arranged on it.

11. Device according to claim 10, in particular for applying the frame bores for hinges having screwing orifices symmetrical with respect to the centre of the hinge part in the frame hinge part, characterized in that the device for applying the frame bores is a boring jig (41) to be placed on the face of the frame profile (46) for co-operation with a manual boring tool, having drill bushes (42) extending perpendicularly to the plane (52) of the table and being linked to the support (17) in such a manner that it can be slid forward and backward in a direction essentially parallel with the plane (52) of the table and perpendicular to the guide rail (13), the boring jig (41) being provided with a stop (49) to be brought to rest against the frame profile (46).

12. Device according to claim 11, for applying the frame bores for hinges with a threaded stem in the centre of the leaf hinge part, characterized in that the centre line (40) of the boring pattern of the boring jig (41) is located on the vertical plane of the boring axis (23) and/or the screwing axis (26).

13. Device according to claim 11, for applying the frame bores for hinges with a displacement between the threaded stem on the leaf hinge part and the centre of the hinge part, characterized in that the boring jig (41) is fixably mounted to the support (17) with two fixing positions in which the centre line (40) of the boring jig (41) is displaced in either one direction parallel to the guide rail (13) by a distance corresponding to the displacement to the boring axis (23) and/or the screwing axis (26).

14. Device according to claim 10, characterized in that the device for applying the frame bores is a boring implement arranged slideably on the carriage (14) and perpendicularly to the plane (52) of the table.

## Revendications

1. Procédé pour fixer des éléments de penture adaptés l'un à l'autre sur des dormants de fenêtre et des ouvrants de fenêtre, dans lequel des éléments de fixation des pentures sont montés sur le dormant de fenêtre et sur l'ouvrant de fenêtre en des positions déterminées,
caractérisé en ce que les différents espacements entre les positions des éléments de fixation sur le dormant et sur l'ouvrant sont définis par rapport au milieu du dormant et de l'ouvrant, la position des éléments de fixation étant déterminée par rapport au milieu de sa hauteur intérieure pour le dormant et par rapport au milieu de sa hauteur extérieure pour l'ouvrant.

2. Procédé selon la revendication 1, caractérisé en ce que le dormant ou l'ouvrant est posé sur un dispositif de montage (1) et centré sur celui-ci, de telle sorte que le milieu du dormant ou de l'ouvrant coïncide avec le milieu (47) du dispositif de montage (1) et en ce que les positions des éléments de fixation sont définies au moyen d'une règle d'espacement qui équipe de façon fixe le dispositif de montage (1).

3. Dispositif pour fixer les éléments de penture sur des dormants de fenêtre et des ouvrants de fenêtre selon le procédé de la revendication 2, constitué par une table de montage (1) comportant un dispositif (4 à 10) pour centrer et immobiliser le dormant ou l'ouvrant, un rail de guidage (13) disposé dans le sens longitudinal de la table de montage (1) et un chariot (14) disposé de façon à pouvoir coulisser sur celui-ci et sur lequel est montée au moins une perceuse (21) dont l'axe de perçage (23) est disposé perpendiculairement au rail de guidage (13), la perceuse (21) pouvant se déplacer dans la direction de l'axe de perçage (23),
caractérisé en ce que la table de montage (1) comporte des dispositifs de butée (15) placés selon des espacements déterminés par rapport à son milieu et en ce que le chariot (14) est doté d'éléments de blocage (16) coopérant avec ces dispositifs de butée (15).

4. Dispositif, en particulier selon la revendication 3, caractérisé en ce que l'axe de perçage (23) se déplace essentiellement parallèlement au plan de la table (52) et en ce que sur le chariot (14) est également prévue une visseuse (24) dont l'axe de vissage (26) est coplanaire avec l'axe de perçage (23) et parallèle à celui-ci, la perceuse (24) et la visseuse (21) étant fixées au chariot (14) par l'intermédiaire d'un support (17) pouvant se déplacer entre deux positions de travail, perpendiculairement à l'axe de perçage (23) et à l'axe de vissage (26) dans le plan défini par ces deux axes, et se déplacer en translation de façon continue dans la direction des axes de perçage et de vissage.

5. Dispositif selon la revendication 4, caractérisé en ce qu'il comprend un dispositif de commande doté d'un détecteur d'avance (27) qui envoie un signal au dispositif de commande lorsque le support (17) est déplacé vers la table de travail (1) dans la direction de l'axe de vissage (26) ou de l'axe de perçage (23), le dispositif de commande, en fonction de ce signal, verrouillant le déplacement du support (17) dans l'autre direction.

6. Dispositif selon l'une ou l'autre des revendications 4 et 5, caractérisé en ce qu'il comporte un moyen d'entraînement, par exemple un vérin pneumatique à double effet, grâce auquel le support (17) peut être positionné contre des butées de fin de course correspondant aux deux positions de travail.

7. Dispositif selon l'une quelconque des revendications 4 à 6, caractérisé en ce qu'il comporte un dispositif de commande doté d'un détecteur de position qui envoie un signal au dispositif de commande lorsque le support (17) se trouve dans l'une ou l'autre des positions de travail, le dispositif de commande n'autorisant, en présence de ce signal, que l'entraînement de l'outil (21 ou 24) correspondant à cette position de travail et, en l'absence de ce signal, que l'entraînement de l'autre outil (24 ou 21).

8. Dispositif selon l'une quelconque des revendications 4 à 7, caractérisé en ce qu'un dispositif est prévu sur le support (17) pour régler l'espacement entre les deux positions de travail et le plan de travail (52).

9. Dispositif selon l'une quelconque des revendications 4 à 8, caractérisé en ce qu'il comporte un dispositif de commande doté d'un détecteur de contact (28) qui, en touchant le montant de l'ouvrant, envoie un signal au dispositif de commande lorsque la visseuse (24), lors du vissage d'un élément de penture dans le montant de l'ouvrant, arrive en fin de course de vissage, le dispositif de commande arrêtant le mouvement de vissage de la visseuse (24) dès réception de ce signal.

10. Dispositif selon l'une quelconque des revendications 3 à 9, caractérisé en ce que sur le chariot (14) est prévu un dispositif pour effectuer les perçages selon des directions de perçage (50) perpendiculaires au plan de la table (52).

11. Dispositif selon la revendication 10, en particulier pour effectuer des perçages de dormant pour des éléments de penture de telle sorte que les trous de vis de la penture de dormant soient symétriques par rapport au milieu de la penture, caractérisé en ce que le dispositif pour effectuer des perçages dans le dormant est un gabarit de perçage (41) pouvant être posé sur le chant du montant de dormant (46) en coopérant avec une perceuse portative et qui comporte des doùilles de perçage (42) perpendiculaires au plan de la table (52), et qui peut être avancé ou reculé essentiellement parallèlement au plan de la table (52) et perpendiculairement au rail de guidage (13) en s'articulant sur le support (17), le gabarit de perçage (41) comportant une butée (49) se posant sur le montant de dormant (46).

12. Dispositif selon la revendication 11 pour effectuer des perçages de dormant pour des éléments de penture avec goujons filetés médians sur la penture côté ouvrant, caractérisé en ce que l'axe central (40) du tracé de perçage du gabarit de perçage (41) se trouve dans le plan vertical de l'axe de perçage (23) et/ou de l'axe de vissage (26).

13. Dispositif selon la revendication 11 pour effectuer des perçages de dormant pour des éléments de penture avec un déport entre le goujon fileté de la penture d'ouvrant et le milieu de l'élément de penture, caractérisé en ce que le gabarit de perçage (41) peut être fixé de façon réglable sur le support (17) selon deux positions dans lesquelles l'axe central (40) du gabarit de perçage (41) est décalé parallèlement au rail de guidage (13) dans chaque direction d'une distance égale à la valeur du déport par rapport à l'axe de perçage (23) et/ou de l'axe de vissage (26).

14. Dispositif selon la revendication 10, caractérisé en ce que le dispositif pour effectuer des perçages dans le dormant est une perceuse montée sur le chariot (14) de façon à pouvoir se déplacer perpendiculairement au plan de la table (52).
